# EUROPEAN PATENT SPECIFICATION

(11) **EP 1 234 442 B1**
(45) Date of publication and mention of the grant of the patent: **21.05.2003**
(21) Application number: 00962761.3
(22) Date of filing: 20.09.2000
(51) Int. Cl.: H04N 5/00, H04N 7/173

(54) **A SYSTEM AND METHOD FOR LARGE-SCALE, DISTRIBUTED, PERSONALIZED MEDIA ON DEMAND**
VORRICHTUNG UND VERFAHREN FÜR VERTEILTE, INDIVIDUELLE MEDIA AUF ANFRAGE, IN GROSSEM UMFANG
SYSTEME ET PROCEDE DE MEDIAS PERSONNALISES, DIFFUSES A GRANDE ECHELLE, A LA DEMANDE

(30) Priority: 22.09.1999 US 155388 P
(43) Date of publication of application: 28.08.2002
(73) Proprietor: Future TV Technologies, Ltd., Dublin 4 (IE)
(72) Inventor: Clark, Paul, London W1H 3DA (GB); Rand, Ricky, London W1H 3DA (GB); Brown, Julian, London W1H 3DA (GB)
(74) Representative: Bloch, Gérard
(86) International application number: IB0001424
(87) International publication number: WO01022725

(56) References cited:
- WO-A-97/12486
- WO-A-99/29108
- DONNELLY A ET AL: "A TUTORIAL ON THE DIGITAL AUDIO-VISUAL COUNCIL (DAVIC) STANDARDISATION ACTIVITY" ELECTRONICS AND COMMUNICATION ENGINEERING JOURNAL,GB,INSTITUTION OF ELECTRICAL ENGINEERS, LONDON, vol. 9, no. 1, 1 February 1997 (1997-02-01), pages 46-56, XP000722910 ISSN: 0954-0695
- "FUNCTIONAL MODEL OF A CONDITIONAL ACCESS SYSTEM" EBU REVIEW- TECHNICAL,BE,EUROPEAN BROADCASTING UNION. BRUSSELS, no. 266, 21 December 1995 (1995-12-21), pages 64-77, XP000559450 ISSN: 0251-0936

## Description

### Technical Field

This invention relates to an interactive television system for delivery of media content on demand to a plurality of subscribers, in which the issues of scaling such a system to a large selection of content and a large number of subscribers are addressed.

### Background of the Invention

A number of systems have been proposed for delivery of media content on demand to subscribers, the most common application being 'Video On Demand' or 'Movies On Demand' for the residential consumer. It should be noted, however, that the techniques involved are suitable for providing any type of electronic media content, including, but not limited to, video, music or other audio, text, graphics, software, including, without limitation, games and applications, and any other data capable of being processed by a computer.

### The Prior Art

The prior art in this field derives from two main areas; the broadcast television and telephony industries, wishing to offer improved services to their subscribers and generate additional revenue streams, primarily through consumer televisions, and the Internet industry, wishing to extend the success of the largely textual and static graphical World-Wide-Web into video, audio and software content, primarily through personal computers. The differing experiences of the two industries have led to two markedly different solutions for the problem of true 'Video On Demand'.

The first difference is physical and institutional. The television/telephony industry solutions are largely monolithic services with a more-or-less fixed connection to the subscriber, albeit through a number of steps required to carry the high bandwidth digital signals across networks that were not originally designed for them (for example, via ADSL over telephone lines, QAM encoding over cable television).

While some designs cater for physical distribution of servers, it is clear that the intention is that all the servers are intended to be managed by a single commercial entity. There is no attempt to design a truly global network under the control of a plurality of organisational managements. This limits both the number of items of media content that can be served to that obtainable by a single organisation, and the number of subscribers that can be provided for under any one service to that which are more-or-less directly connectable to it.

The Internet industry solution, as can be seen under development at a number of well known World-Wide-Web sites, is quite different. The system consists of a large number of independent servers, physically distributed and under many different managements, to which the users connect temporarily over a world-wide packet switching network. Due to the system's distribution, there is no limit to the number of items of content that can be stored, nor to the number of users that can be provided for, nor to the ability to geographically and organisationally distribute either content or users. However, the present technologies impose severe restrictions on the quality and reliability of media content that is transmissible over the Internet.

The second difference is one of subscriber experience. Due to its centralised nature, the television/telephony industry solution can provide a single, integrated service under a single billing arrangement, and can make guarantees of service to the subscribers, providing a high-quality easy-to-use service as is expected by their subscribers. In some designs, an element of personalisztion is offered to make the service even easier to use.

The Internet industry solution, however can offer no such integration or guarantees. The conventional method is to make one contract with a browser provider, one contract with an 'Internet Service Provider' (ISP) for raw network access, one or more contracts with 'portals' for personalised integration services, and then possibly further contracts with content providers. In the present market, many of these contracts are 'free' (often subsidised by advertising), but are nevertheless relationships with providers which the user has to explicitly enter into, if only by registration. Indeed, the fact that the contracts are 'free' indicates that the technology is too immature to deliver anything that the users actually value. The result is a hodgepodge of shifting relationships which cannot deliver either a satisfactory experience for the user or a long-term revenue stream for the providers.

The third difference is in the way content is addressed. In the television/telephony designs it is clear that, being monolithic services, the content is addressed by name, with the location being implicit in the service being used. This is so 'obvious' to these services that most of the prior art in this area does not bother to mention how the content is addressed at all. However, to allow for scalability to a large number of items of media content, and/or a large number of subscribers, a mechanism is required for distribution of the content and subsequent resolution of a location-independent name of an item of content into a set of locations for the content.

In the Internet industry, World-Wide-Web content is addressed by Uniform Resource Locator (URL) in which the location of the content is explicitly encoded into the address. This carries the inherent problem that some other mechanism (such as a search engine) has to be used to find the location of the content required, and also that addresses become invalid when content moves. There are designs for location independent names (Uniform Resource Names, or URNs), that address this issue, but these are not being used as part of an integrated, personalised interactive television system.

A fourth part of the solution, which neither industry has properly dealt with, is the way in which *meta-data*, or data describing the content, is carried from content provider to end subscriber. Currently, each service or Web-site has its own isolated database of content with varying categories of information and with widely differing interfaces. The decoupling of the content owners from the content databases that link to them leads to a perennial problem of out-of-date, inaccurate information. There is no way for each content-providing organisation to provide meta-data about its products in a standardised way which can be accessed through a single integrated interface, and acted upon as part of a single exercise in personalisation, while retaining direct administrative control over it.

It should be clear, then, that while the Internet allows for a high degree of scalability, it does not offer the technology to enable a high quality, integrated service as expected by television subscribers. On the other hand, existing 'video-on-demand' systems from the television and telephony industries do not offer the scalability, both physical and organisational, to provide a universal service.

Further, reference is made to WO-A-99129 108 disclosing providing integrated near video on demand access.

### The Requirement for Scalability

The prior art has been aimed at relatively small-scale, independent, 'value-added' services to be offered to existing subscribers of television and telephony networks on a relatively local basis. It is an objective of the present invention to move beyond the prior art by providing the features necessary for massive scalability of such a system, in order that it may eventually replace or absorb the existing media distribution networks.

A truly all-encompassing system as is envisioned by the present invention has to be scalable in three different directions at once:
1) In terms of number of subscribers connected;
2) In terms of number of items of media content stored; and
3) In terms of geographical distribution of both subscribers and content

Such massive scale presents specific problems which the present invention addresses, namely:
1) The ability to store a huge amount of media content, distributed geographically;
2) The ability to deliver that content reliably on demand to any of a huge number of geographically distributed subscribers;
3) The ability of the content owners or distributors to manage and advertise that content, maintaining timeliness and accuracy:
4) The ability of the subscribers to find content that interests them amongst the huge variety; and
5) The ability to charge the subscribers fairly for use of the content, and to distribute the revenue amongst service providers, network providers, content owners and distributors in a flexible manner.

The present invention directly addresses these problems in the following manner:
1 ) With a novel mechanism for distributed media storage, location and provision, which allows media servers to be maintained by multiple, geographically distributed organisations.
2) With a novel network architecture providing both a massively scalable media server and wide-scale distribution as part of the same design.
3) With a novel mechanism for distribution of 'meta-data', or data about the content, which allows control of the meta-data by multiple, geographically distributed organisations.
4) With a novel mechanism for portable personalisation which provides a unique interface for each subscriber, wherever they may be, assisting them in locating and remembering items of content of interest to them.
5) With a novel billing system which automatically calculates prices and distributes revenue to providers.

### Object of the Invention

It is therefore an object of the present invention to provide a number of novel mechanisms which combine the best features of each of the prior art solutions in an optimum way, with improvements, in order that:
a) Content provision can be distributed both geographically and organisationally, in order to allow the maximum availability of content, both in terms of numbers of items and physical distribution;
b) Meta-data can be distributed both geographically and organisationally. in order to provide timely, accurate information about all the content available, in an integrated form with unified links between items;
c) Subscribers can connect to the service at many different locations while receiving the same integrated, personalised service; and
d) Media content can be delivered with a sufficient quality and reliability that it will be a satisfactory experience for subscribers and hence make it possible for providers to generate useful revenue streams from it.
e) Billing for service can be done in an integrated, flexible way which allows for the complexities of provider relationships.

The present invention is the first to fully address all of these aims in a fully scalable manner.

### Summary of the Invention

The invention is as set out in claims 1 and 8.

The present invention relates to a scalable system for providing integrated on-demand access to interactive media content through a television. The instant system comprises:
a plurality of interface means for reproducing media content on a plurality of televisions, each such interface means including an authentication means for authenticating an individual subscriber or group of subscribers to the system;
at least one database server for storing, accessing and maintaining an integrated subscriber database;
a plurality of media server means for storage and provision of a plurality of items of media content, each item of media content being identified by a unique location-independent name;
a plurality of meta-data server means for storage and provision of meta-data concerning the items of media content;
a plurality of mapping server means for mapping a location of the plurality of items of media content on the plurality of media servers according to their location-independent names;
a plurality of interface server means comprising personalisation means for individual customisation of a user interface based on information stored in the subscriber database and meta-data from the plurality of meta-data server means, and location lookup means for discovering from the plurality of mapping server means at least one media server which holds a copy of an item of media content identified by a location-independent name; and
a network connecting at least the plurality of interface means, the at least one database server, the plurality of media server means, the plurality of meta-data server means, the plurality of mapping server means and the plurality of interface server means.

The meta-data server means, mapping server means and interface server means are each software subsystems which may reside on the same or different server computers in any combination.

The authentication means comprises means for insertion of a data-carrying card and means for reading authentication information from said card. Typical data carrying cards include, for example, magnetic stripe cards and contacted and contactless chip-carrying 'smart-cards'.

The integrated subscriber database includes profile information about each subscriber, and the personalisation means includes a matching means for generating a list of recommended content for each subscriber. Matching includes making use of the meta-data about the content from the plurality of meta-data server means, together with the profile information for each subscriber from the integrated subscriber database.

Each of the mapping server means obtains content maps from a local subset of the media server means, and floods content advertisements throughout the network to the other mapping server means. The network is organised hierarchically, and content advertisements are aggregated in hierarchical groupings.

The media content comprises at least one of video programming, audio programming, textual information, graphical images, software, including games and/or applications, and other data capable of being processed by computer.

The user interface comprises an output means for generation of at least one of textual display, graphical display, application or game software rendering, video playback and audio playback, and an input means for recognition at least one of: button presses on a controller, such as an infra-red or radio-frequency remote control or a keyboard; movement of a device controlling an on-screen pointer and activation of the pointer at a position; and voice commands.

The user interface further comprises a plurality of substantially distinct screens which can be navigated by the subscriber with the input means. The distinct screens include at least one of:
A genre browser for browsing the available media content according to a genre classification;
A bookmark browser for browsing items of media content which have been the subject of a previous subscriber request to bookmark them;
A portfolio browser for browsing the available media content according to authorship, appearance or other involvement of an individual or group with the creation of the media content.

The meta-data includes location-independent names, and further information including at least one of:
authorship, appearance or other involvement of an individual or group with the creation of media content;
classification of media content according to genre;
profiling of media content according to qualities including violence, adult content or comedy;
pricing information applicable to media content;
dates of publication and regional release dates of the media content;
links to other media associated with the media content, including subtitles, Web-sites. soundtracks, or books.
natural language identification for media content; or
statutory or other rating information for media content.

The meta-data server means stores the meta-data as a distributed database. A possible example of the distributed database is an X.500 Directory Information Tree.

The present invention also comprises a method for providing scalable on-demand access to an interactive media service through a television. The instant method comprises the steps of authenticating a subscriber to the service and generating a personalised user interface for the subscriber.

The generation of a personalised user interface comprises looking up a subscriber profile in a subscriber database, looking up meta-data about a plurality of items of media content in a distributed meta-data database, matching the subscriber profile to the meta-data, and selecting an at least one item of media content predicted to be of interest to the subscriber for inclusion in the personalised user interface.

Part of the generation of the personalised user interface is performed as a background process in advance of a subscriber request.

After the subscriber views the personalised user interface, the subscriber selects an item of media content from the personalised user interface. The selection results in the requesting from the interactive media service the selected item of media content by a location-independent name and the discovering of an at least one media server holding a copy of the selected item of media content out of a plurality of possible media servers using the location-independent name; and the delivery of the selected item of media content from a media server to the subscriber.

Authenticating comprises inserting of a data-carrying card into an interface unit and the reading of the authentication data from the card. Looking up meta-data comprises searching a distributed database, and searching comprises, for example, issuing X.500 Directory Access Protocol or Lightweight Directory Access Protocol requests.

Discovering of the selected item of media content comprises sending a request to a first mapping server to look up an at least one media server holding a copy of the selected item of media content in a map held by the first mapping server. If known at the first mapping server, the request is responded directly with the address of the at least one media server holding a copy of the item of media content, and if not known at the first mapping server, the request is delegated to a second mapping server.

The instant method further comprises a means for indirecting the delivery via a second media server before forwarding to the subscriber. The indirect delivery to the second media server can be performed at a faster rate than the forwarding to the subscriber. In the present method a selected item of media content can be kept at the second media server and the selected item of media content is advertised at the second media server for subsequent use by the same subscriber or other subscribers. The delivery from the first media server to the second media server can be maintained even if the subscriber chooses to cancel the delivery, so as to ensure a complete copy of the item of media content at the second media server for subsequent use.

A record of the delivery of media content is entered in a transaction database. The record of delivery is accounted for in an accounting system comprising a plurality of subscriber accounts and an at least one merchant account.

The accounting comprises adding a plurality of charges to be credited to a plurality of merchant accounts to form an aggregate cost to be debited from a subscriber's account. The accounting can further comprise subtracting an at least one subsidy from the aggregate cost, and debiting an at least one corresponding merchant account. The accounting can further comprise adjusting the charges according to the time of the day or day of the week.

A subscriber's profile in the subscriber database can also be modified as a result of the record of delivery.

### Network structure

In an embodiment of the invention, the system comprises a packet switch network organised as a plurality of *clusters,* each cluster comprising a packet switch connecting together a cluster manager unit and optionally one or more media servers, or subscriber access network interfaces connected through a subscriber access network to subscriber interfaces, or subscriber database servers, or other services and interfaces, in any combination. The clusters may be directly connected in a local array, or geographically distributed with wide-area interconnections.

In a preferred embodiment of the present invention, the network is further organised hierarchically, and clusters are grouped into *regions* which advertise routing and content to upper levels as if they formed a single unit. This reduces the size of the routing tables and content maps at each level, and allows the system to scale indefinitely without meeting limits of storage, transmission or processing of such information. Such hierarchical organisation is familiar for routing information in systems such as OSPF and PNNI.

### Brief Description of the Drawing

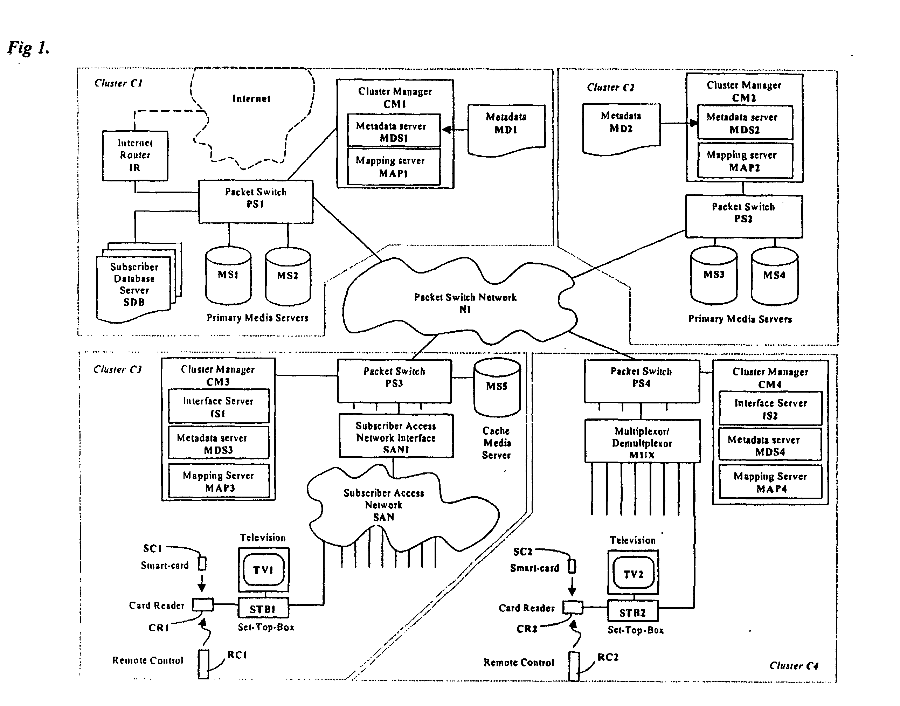

Fig. 1 is a block diagram of a minimal embodiment of the system. which includes four clusters connected together with a packet switch network, including a cluster connected to subscribers via an external subscriber access network, a cluster connected to subscribers directly through a packet multiplexor/demultiplexer, a cluster providing only media content and meta data, and a cluster providing media content, meta-data, a subscriber database server and Internet gateway.

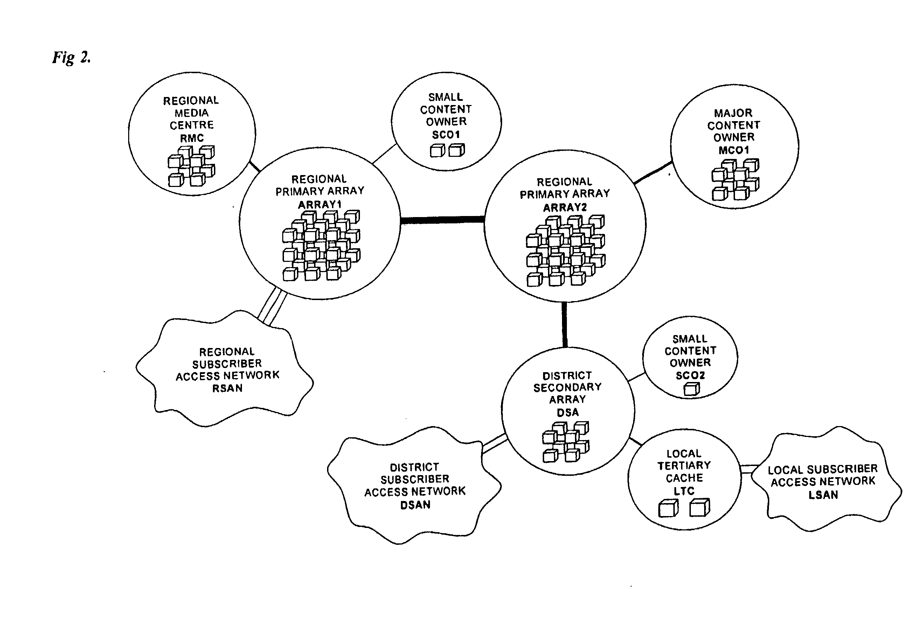

Fig. 2 is a block diagram of an example network, showing central cluster arrays, connectivity to subscriber networks at a variety of levels, and a number of external content sources.

### Detailed Description

### Structure of the Network

### Cluster Configurations

Fig. 1 shows a block diagram of a minimal embodiment of the present invention, including all the essential aspects. The system is designed to scale well beyond the size shown here. Fig. 1 shows four clusters **C1-4** connected by a packet switch network **N1.** Each of the four clusters **C1-4** shown in Fig. 1 have common elements and differences. It should be noted that the elements that make up each cluster may be chosen to achieve various results described herein, and it will be apparent to a person of ordinary skill in practicing the present invention how to vary the elements in each cluster to achieve differing results. The common elements are the packet switches **PS1-4** and the cluster managers **CM1-4.**

The packet switches **PS1-4** are high-bandwidth packet switches such as are known in the art, and provide internal links within each cluster and also inter-cluster links via the packet switch network. While the configuration shown presents four different embodiments of a cluster configuration, the number of links of the packet switch allocated to media servers, subscriber access network interfaces and inter-cluster links is designed to be flexible and may be easily varied by those skilled in the art.

The cluster manager units **CM1-4** are preferably industrialised computers, hosting at least one of the following software servers:
1) An interface server **IS1-2** providing personalisation and location lookup services to subscribers.
2) A mapping server **MAP1-4** creating a map of the content available on the cluster and advertising it to mapping servers on other clusters, receiving advertisements from other clusters, and providing access to the global map to the interface servers **IS1-2** and meta-data servers **MDS1-4,** if present.
3) A meta-data server **MDS1-4** holding a local database of content meta-data information originated on this cluster, providing the meta-data to other clusters, and offering access to the global meta-data database to the interface servers **IS1-2,** if present.

The interface servers **IS1-2** are only present on clusters which connect to subscribers. The meta-data servers **MDS1-4** are present on clusters which connect to subscribers, for use by the interface servers **IS1-2,** or on clusters which provide meta-data. The mapping servers **MAP1-4** are always present.

If a meta-data server **MDS1-4** provides original meta-data to the network, it is known as an *originating* meta-data server. If it merely provides access to the global meta-data database without providing any original data of its own. it is known as a *slave* meta-data server.

The mapping servers **MAP1-4** obtain maps of content availability from the media servers **MS1-5** connected to the local packet switch. if any. and information concerning other services, such as subscriber database. Internet gateway or originating meta-data servers, then broadcast advertisements of the content and services to corresponding mapping services in other clusters in the network through a flooding process such as is known in the art for routing topology advertisement. Conversely. on receipt of content and service advertisements from other clusters, the mapping servers **MAP1-4** generate a global map of the availability of content and services for use by the local interface servers **IS1-2** and slave meta-data servers **MDS3-4**.

In a preferred embodiment of the present invention. the meta-data servers **MDS1-4** include an X.500 or LDAP directory server, and use the X.500 or LDAP directory protocols to access further X.500 or LDAP directory servers which may be other meta-data servers in the system, or external to the system, accessed by an Internet gateway. In this preferred embodiment, the meta-data is stored as attributes of directory objects which represent items of media content in a Directory Information Tree.

The following elements can be provided in a cluster, or not, as is required or desirable:

The media servers **MS1-5** are units which store items of media content as files on hard disks or other memory devices, and which can be instructed to deliver the items of media content as a plurality of interleaved, substantially regular streams of data onto a network. Such units are well-known in the prior art, and may be constructed from commonly available computer equipment or custom hardware as is required. It should be noted that the distributed nature of the system does not require any one media server unit to deliver a particularly large number of streams. which leaves considerable flexibility in implementation of such a unit by those skilled in the art.

In cluster **C3,** the subscriber access network interface **SANI** is a bridging or gateway device such as is known in the art, providing bridging from the packet switch network to a variety of subscriber access networks. The subscriber access network **SAN** may be one of a number of mechanisms for distribution of high-speed data to residential or business subscribers, well known in the art, including, but not limited to ADSL over traditional telephony copper and QAM/MCNS over traditional cable or community antenna television networks.

Cluster **C3** also provides a cache media server **MS5** through which items of media content are indirected the first time they are requested, and from which they can be served directly without using external network bandwidth on subsequent requests from subscribers on the same cluster.

The subscriber interface is a 'Set-Top-Box' **STB1** which comprises:
1) A microprocessor, random access memory and non-volatile storage for boot software.
2) A network interface connected to the subscriber access network SAN.
3) A television output which may display attractive graphical, textual and audio 'menus' on a television **TV1** and decodes and plays media content, including, without limitation, video and audio content.
4) A controller, that may be an infra-red remote control **RC1,** which allows the subscriber to enter key-presses to control the menus; the controller may optionally be a full keyboard including a track-ball for control of a pointer for more advanced interfaces.
5) A smart-card reader **CR1** which reads authentication keys from an insertable smart-card.
In a preferred embodiment, the smart-card reader and infra-red receiver are located in a separate unit **CR1** connected by a cable to the Set-Top-Box **STB1** which allows flexibility of siting of the two units given that the Set-Top-Box **STB1** no longer has to be visible or accessible; (in other words, the Set-Top-Box need not be set-top in orientation).

In an further preferred embodiment, the Set-Top-Box also has a mechanism for receiving and interpreting voice commands, either directly, or through the separate unit, e.g., **CR1** or through the remote control unit, e.g., **RC1.**

Cluster **C4** is a further configuration of a cluster which would be used within a multi-occupancy building, a hotel or commercial environment. The packet switch **PS4** is connected directly to a further packet switching subnetwork making use of a further packet multiplexor/demultiplexors **MUX** which directly connects to the Set-Top-Box **STB2.** The packet multiplexor/demultiplexor **MUX** may be further general packet switches such are known in the art, or specific designs which only allow switching between upgoing and downgoing ports, but not between downgoing ports. Further packet switches and/or multiplexing levels may be added between the packet switch **PS4** and the Set-Top-Box **STB2.**

The Set-Top-Box **STB2** and associated elements **TV2, CR2, SC2** and **RC2** are similar to the corresponding elements **STB1, TV1, CR1, SC1** and **RC1,** except that the Set-Top-Box **STB2** has a direct packet switching interface rather than a subscriber access network interface.

Cluster **C2** is a still further configuration of a cluster. This configuration does not connect any subscribers to the network, but provides content from media servers **MS3-4** and associated meta-data **MD2** from the meta-data server **MDS2.** The mapping server discovers and advertises the media servers **MS3-4** to the wider network.

Cluster **C1** is a still further configuration of a cluster. As well as media servers **MS1-2,** meta-data **MD1** and meta-data server **MDS1,** as in cluster **C2,** cluster **C1** further provides subscriber database services and an Internet gateway to the system. The packet switch **PS1** is connected to a subscriber database server **SDS** and an Internet router **IR** which connects to the wider Internet. The mapping server **MAP1** discovers and advertises these services and the media servers **MS1-2** to the wider network.

One or more database servers may be connected to the network in this manner, providing in combination an integrated subscriber database holding information on subscribers keyed by authentication keys read from the smartcards **SC1-2.**

One or more Internet gateways may also be connected to the system in this manner, providing
for World-Wide-Web access by subscribers. In addition, the system's network protocols may be tunnelled over Internet links where this is convenient.

The exact manner of connection of database servers and Internet routers to the cluster is flexible and may be easily varied by one skilled in the art.

### The network

According to the present invention, the overall network is completely flexible in topology, and may consist of a number of differently sized arrays of clusters or individual clusters, connected together in any convenient manner, geographically distributed if required. The flexibility of sizing and location allows for adjustment of the network topology to fit local requirements for caching or distribution.

In a preferred embodiment of the invention, each array of clusters is treated as an independent *region* in a hierarchical organisation, and advertises itself as a unit to the higher-level network.

Fig. 2 shows an example topology for such a network. The structure consists of two regional primary arrays **ARRAY1-2,** connected together with a high-bandwidth link. These would form the core storage and services of the network, and would be sited at regional data centres.

Connected to **ARRAY1** is a regional media centre, **RMC,** containing a smaller array and a small content owner **SCO1** which has only a pair of clusters. These are sites providing media content for the service, and will publish content and meta-data from their clusters so that it can be used throughout the network.

Also connected to **ARRAY1** is a regional subscriber access network **RSAN.** We are assuming for the purposes of this example that the region covered by **ARRAY1** already has a wide-scale integrated digital network for subscribers, and hence the regional subscriber access network can be directly connected into the clusters in the array. In this case, each cluster in **ARRAY1** will contain a number of subscriber access network interfaces **SANI** as at Fig 1.

Connected to **ARRAY2** is a major content owner **MCO1,** which has its own smaller array in a similar way to the regional media centre **RMC.** The difference is organisational - whereas the regional media centre is under the control of the service provider, the major content owner's array is owned and managed by the content owner itself.

For the purposes of this example we assume the region covered by **ARRAY2** does not have an existing wide-scale integrated subscriber network, and hence some method of further distribution is required. Connected to **ARRAY2** is a district secondary array **DSA,** of which there would be several in a real network.

The district secondary array **DSA** provides further storage and services reducing the load on the **ARRAY2-DSA** link and the primary arrays. Attached to the district secondary array **DSA** is a further small content owner **SCO2** who may wish to publish content relevant only to the district, or cause their content to be available throughout the network.

It is important to note that content provision is not necessarily centralised in this model, which therefore mimics the real world distribution of content providers.

For the purpose of example we assume that the district that the district secondary array **DSA** covers has a district subscriber access network **DSAN** with partial coverage. As with the regional primary array **ARRAY1,** the district subscriber access network **DSAN** is directly connected into the district secondary array **DSA** through subscriber access network interfaces **SANI** contained within the array clusters, as at Fig. 1.

However, for the purpose of example. we assume that some areas of the district have to be further distributed within the network, and a local tertiary cache **LTC** is provided which provides storage and services to a small local subscriber access network **LSAN**, which is connected into the pair of clusters in the same way in the district secondary array **DSA.** This has the effect of reducing the load on the **LTC-DSA** link and all the higher-level arrays.

Such a scalability and flexibility in network topology, connectivity to subscriber access networks and placement of caching is essential to create a large-scale service which covers all the possible scenarios necessary for large-scale and/or global delivery of an interactive television service.

### Method of Operation

Throughout this description, it is assumed that the routing protocols of the packet switch network, or other mechanisms, provide routing through the network, and have made available distinguished global addresses for services such as the database server, and distinguished local addresses within a cluster for cluster manaeers.

Part of the method of operation involves background operation of the network which happens independently of any subscriber request, and part involves operations directly caused by a subscriber request.

### Background operation

In the background operation, over and above the normal background operation of a packet switch network for routing etc., there is a mapping process by which the availability of items of media content is collected within a cluster, and then distributed between clusters such that each mapping server **MAP1-4** has a global map of the availability of content. Other services such as the presence of a database server, internet gateway or originating meta-data server are also mapped and advertised in the same manner.

When a media server **MS1** is first powered on, and regularly thereafter. it advertises itself to a mapping server **MAP1** running on the cluster manager **CM1** of the cluster **C1** it finds itself on. The mapping server **MAP1** then requests a directory of the content available on the media server **MS1**, expressed as a list of location-independent names. This process occurs similarly. and independently, with any other media servers **(MS2)** on the cluster.

In addition, the cluster manager identifies services configured to be provided by the cluster, which may include a subscriber database server **SDS,** Internet router **IR,** and/or an originating meta-data server **MDS1.**

Having discovered a map of the content and services available on the cluster **C1,** the mapping server **MAP1** broadcasts the map to all other mapping servers **MAP2-4** in the network. The mechanism for the broadcast is network-specific, and may be provided for by the network infrastructure itself, or may require the mapping servers to participate in a flooding algorithm such as is familiar in link-state routing protocols such as OSPF and PNNI.

In a preferred embodiment of the present invention, the network is organised hierarchically with clusters being grouped into pre-defined *regions.* The advertisements of content and services are limited in scope to the local region, which then advertises itself as a unit to a higher-level region. Mapping servers at higher levels advertise themselves to the mapping servers in the lower-level region to allow the lower-level mapping servers to delegate requests for unknown content upwards. This allows the network to be scaled indefinitely without meeting limits on storage, transmission or processing of advertisements. Such a hierarchical operation is also known in the prior art for routing information in protocols such as OSPF and PNNI.

As a result of the background mapping process of the present invention, each mapping server **MAP1-4** obtains a global map of the content and services available on the network. In the preferred embodiment, each mapping server obtains a map of the content and services available in the local region, plus one or more references to mapping servers at higher levels in the hierarchy to which it can delegate requests that it cannot handle itself.

Once the map is obtained, the interface servers **IS1-2** can request from the local mapping servers **MAP3-4** the location of a subscriber database server **SDS**, and each creates a connection to that server for use during subscriber-initiated processing.

Furthermore, the slave meta-data servers **MDS3-4** can request from the local mapping servers **MAP3-4** the location of originating meta-data servers **MDS1-2** from which meta-data about content can be obtained. In a preferred embodiment of the present invention. the slave meta-data servers **MDS3-4** prefetch some aspects of meta-data from the originating meta-data servers **MDS1-2** as part of the background operation.

### Subscriber-initiated operation

A subscriber wishing to make use of the service powers on television **TV1** and set-top-box **STB1,** and inserts smart-card **SC1** into card reader **CR1** (the card reader **CR1** preferably receiving power from the set-top-box **STB1**). As is well known, once power is applied. the unit will *boot,* and prepare itself for use. After the boot sequence, card reader **CR1** reads authentication information from smart-card **SC1** using protocols well known in the art and communicates this to set-top-box **STB1.** Set-top-box **STB1** sends a first request to interface server **IS1** running on cluster manager **CM3,** via the subscriber access network **SAN,** subscriber access network **SANI** and packet switch **PS3,** quoting the authentication information, and requesting a first coded menu page for the subscriber.

In response to the first request, the interface server **IS1** requests from the database server SDS the profile of the subscriber keyed by the authentication information. In an embodiment of the present invention, the profile comprises the age, sex and other relatively fixed aspects of the subscriber such as can be discovered by a questionnaire upon subscription. In a preferred embodiment of the present invention, this profile further comprises a dynamic representation of the likes and dislikes of the subscriber expressed as a position in a multi-dimensional space, each axis representing some aspect of classification such as a particular genre, generic properties such as 'violence', 'comedy', or specific themes such as 'gardening', 'martial arts'. The axes are numbered on an arbitrary scale representing 'strongly dislikes' through 'indifferent' to 'strongly favours'. In a more preferred embodiment of the present invention, each axis is further given a weighting on an arbitrary scale representing 'not important' to 'critical'.

Other forms of subscriber profiling are possible and may be created by those skilled in the art.

Further in response to the first request, the interface server **IS1** requests at least one search on the local meta-data server **MDS3** to obtain a list of content which will be of interest and suitable for display to the subscriber, taking into account the subscriber's profile. In a preferred embodiment of the present invention, the interface server **IS** requests profile and genre information on all available content which is suitable for the subscriber from the meta-data server **MDS3,** and performs a weighted matching algorithm to generate a list of the content which is most likely to be of interest to the subscriber.

On receipt of a search request, the meta-data server **MDS3** requests a list of originating meta-data servers obtained by the background processing from mapping server **MAP3,** and uses requests to the originating meta-data servers on this list to obtain the relevant aspects of meta-data for all available content. In a preferred embodiment of the present invention, the meta-data server **MDS3** caches the results of such requests for future use. In an alternative preferred embodiment of the present invention, the meta-data server **MDS3** pre-fetches the searchable aspects of the meta-data for all available content as part of the background operation.

In an alternative embodiment of the present invention, the meta-data server uses a distributed search facility such as is provided by the X.500 Directory Access Protocol to obtain the list of relevant content and associated meta-data. as is well known in the art.

The weighted matching algorithm consists of calculating, for each item of media content, a difference between the subscriber's preferred value on a particular axis and the value stored in the content's meta-data for that axis, multiplying by the weighting of the axis in the subscriber's profile, and summing all such weighted differences for all axes for the piece of content. The result is an indication of the divergence of the content from the subscriber's ideal. The content can be presented with the least such result appearing first.

Other algorithms for matching of the subscriber profile to content meta-data are possible and may be created by those skilled in the art.

In a more preferred embodiment of the present invention, the list of suggested content has any items of media content that have already been watched by the subscriber removed from it before presentation in the user interface. Removal is done by reference to a database of previous transactions keyed by the subscriber authentication information.

In an alternative embodiment of the present invention, the list of suggested content for each subscriber is maintained by a background process which adds new content as it becomes available, if relevant, and removes content following delivery to the subscriber.

Having obtained a list of relevant content for the subscriber, the interface server **IS1** returns a first coded menu of choices to the set-top-box **STB1,** in which each choice of content has attached to it a location-independent name with which to retrieve the content. In a preferred embodiment of the present invention the menus are coded in HTML. In a more preferred embodiment of the present invention, the menus are coded in a scripting language, which may, but need not be proprietary; moreover, such scripting language is preferably designed specifically for television displays.

On receiving the first coded menu, the set-top-box **STB1** presents it to the subscriber, and allows them to select a choice through pressing buttons on a remote control or movement of a pointer and selection of an item under the pointer. In an alternative embodiment of the present invention, the selection is performed by voice commands.

In a preferred embodiment of the present invention each choice of content has attached to it a reference to a second coded menu further describing the specific item of content. In this preferred embodiment, the set-top-box **STB1** requests a second coded menu from the interface server **IS1** using the reference provided in the first coded menu. To create the second coded menu the interface server **IS1** requests further meta-data concerning the item of content from the meta-data server **MDS3.** The further meta-data includes pictures or other media associated with the item of content, information about people or groups associated with the item of content, the year of creation of the item of content, pricing information for the item of content and statutory rating information for the item of content.

The pricing information for the item of content consists of a reference to a billing scheme whereby zero or more charges are made by different providers within the system, which may include copyright owners, distributors and network providers. and which may consist of any mixture of one-time or elapsed-time-based charges. The price payable is the total of such charges for the piece of content. In a more preferred embodiment of the present invention, such charges may be negative, and represent a subsidy to the subscriber for watching the item of content, for example, for advertisements. In a further more preferred embodiment of the present invention, the overall charge may be discounted or increased due to time-, date- or subscriber-specific discounts or premiums.

On receipt of the request for meta-data on specific content, the meta-data server **MDS3** delegates the request to an originating meta-data server **MDS1-2** which holds the meta-data for the content requested, the location of the originating meta-data server having been cached following the first request. In a preferred embodiment of the present invention, the further meta-data is also cached at the meta-data server **MDS1** for future use.

In an alternative embodiment of the present invention, the location of meta-data for a specific item of content is determined by a series of referrals traversing a distributed set of objects, such as an X.500 Directory Information Tree, as is well known in the art.

In a more preferred embodiment of the present invention, the user interface further consists of a plurality of distinct screens in which the meta-data is used to guide the subscriber through the available content. The content may be browsed according to genre classification, such as 'action', 'comedy' or 'jazz'; involvement of a person or group with the production of the content as, for example, author, actor, musician or director; or by grouping such as multiple episodes of the same series. In each case similar mechanisms of meta-data searching are used to compile the list of relevant content.

Furthermore, in this more preferred embodiment, the content may be browsed by use of bookmarks requested by the subscriber and stored in the subscriber database.

Through any of these mechanisms, the subscriber may eventually choose an item of media content to be delivered. On receipt of the choice, the Set-Top-Box **STB1** requests a streamed copy of the item of content from the service by sending a second request to the interface server **IS1** quoting the location-independent name of the item of content. The interface server then requests from the local mapping server **MAP3** a list of media servers which hold the item of content.

If the mapping server **MAP3** knows of a location of the item of content, it will return a list of such locations. In one embodiment the list is sorted according to 'network distance' from the subscriber. As is known from the prior art in routing protocols, such network distance is an arbitrary figure representing the cost of transmission over the best path between two network nodes, and can be obtained from routing protocols such as OSPF and PNNI. For content having equal 'network distance' from the requester, similar requests should yield a different list order, as for example, a round robin, so that one location of the item of content is not continually called upon to provide the content, while another is under-utilized. In another embodiment, for redundancy and fault-tolerance, where there are multiple locations for a requested item of content, all of the locations may be used in a round robin, or alternatively, the mapping server should ensure that the same location is not placed at the head of the list twice in a row.

In a preferred embodiment, wherein the network is organised hierarchically, if the mapping server **MAP3** does itself not know the location of an item of content within its own region, it may delegate the request to a mapping server at a higher level which has an overview of a number of regions. This process may continue upwards if further levels of hierarchy are present.

On receipt of the sorted list of media servers holding the item of content, the interface server **IS1** attempts to start a stream at each one in turn until successful. Assume the list is **MS1** followed by **MS3.** Starting a stream involves firstly opening a guaranteed bandwidth connection on the network by issuing commands to the underlying network service. and secondly requesting the media server **MS1** to start the stream, quoting the address of the Set-Top-Box **STB1** to be delivered to. If either operation fails, the stream will be cancelled and the next media server **MS2** attempted.

On receipt of the data from the media server **MS1,** the Set-Top-Box **STB1** will immediately begin decoding the data and displaying or otherwise rendering the content. Independently, the interface server **IS1** will acknowledge the request for the stream, quoting the address of the selected media server **MS1** so that the Set-Top-Box **STB1** may send requests to the media server **MS1** for pause, fast-forward and rewind as is well known in the art.

In a preferred embodiment of the present invention, the Set-Top-Box **STB1** may also send requests to the media server **MS1** to vary the rate of transmission so as to maintain exact synchronisation of transmission and decoding, in order that buffers in the Set-Top-Box **STB1** neither underflow nor overflow.

In an alternative embodiment of the present invention, the delivery of the data is indirected via a second media server **MS5** which stores and immediately retransmits the data to the Set-Top-Box **STB1** as it receives it from originating media server **MS1.** This makes the item of content available directly from media server **MS5** to other subscribers on the same cluster **C3,** avoiding the network bandwidth between cluster **C1** and cluster **C3.** In a preferred embodiment of this alternative, the delivery from media server **MS1** to media server **MS5** is performed at a faster rate than the delivery from media server **MS5** to Set-Top-Box **STB1.** This both allows a proportion of fast-forward and rewind to be performed locally at the media server **MS5** without modifying the stream from media server **MS1,** which makes it easier to share the item of content among multiple subscribers on cluster **C3**, and reduces the number of connections outstanding across the packet switch network **N1** at any one time.

The transmission, decoding and rendering of the content proceeds until the content comes to an end or the subscriber chooses to cancel it. In both cases the Set-Top-Box **STB1** sends a request to the interface server **IS1** to stop the stream, and the interface server **IS1** requests the selected media server **MS1** to stop the transmission (which it may already have done), and closes the network connection between media server **MS1** and Set-Top-Box **STB1.**

In the alternative embodiment in which the delivery is indirected via another media server **MS5,** the stream from **MS5** to Set-Top-Box **STB1** is stopped immediately, but the stream from **MS1** to **MS5** may be allowed to continue to its end to provide a complete copy of the item of content on media server **MS5** for future use. Such a decision depends on the load on the servers **MS1** and **MS5,** the load on the network, and the predicted popularity of the content.

Upon finishing, the interface server **IS1** creates a transaction record in the subscriber database **SDS** noting the item of content delivered, the time and date, the subscriber and the length of time delivery was maintained. For example, the number of seconds of transmission, or even the precise frames or range of frames that were delivered may be recorded. In a preferred embodiment. the length of time of delivery was maintained would consist of the range of frames delivered, including any ranges that were frames that were re-delivered, as would result from a "rewind" operation by the subscriber. This transaction record is then used in three independent ways:
1) To account for the delivery in an accounting system, crediting and debiting provider accounts and the subscriber's account according to the pricing mechanism described above.
2) To remove the item of content from the list of interesting content for the subscriber, in the embodiment in which the list is precompiled.
3) To modify the subscriber profile according to the meta-data profile attached to the content, in the preferred embodiment in which the profile is dynamic.

In a preferred embodiment of the present invention, modifying the subscriber profile comprises according a positive score to the content if it has been enjoyed to its natural end, and a progressively negative score if it has been cancelled early. This score is used to adjust the values and weightings on each axis of the subscriber profile according to the values given for each axis in the content meta-data, weighted by the score. A very high or low value in the weighted meta-data causes the subscriber value for that axis to be increased or decreased accordingly, and the weighting given for that axis to be adjusted upwards slightly. A median value in the weighted meta-data does not cause the value for that axis to be adjusted, but does cause the weighting given for that axis to be decreased slightly.

Other algorithms for adjustment of the subscriber profile are possible and may be created by those skilled in the art.

In an alternative preferred embodiment of the present invention, the score is obtained by an explicit question asked of the subscriber following the natural end or early cancellation of the delivery and the same adjustment performed. This information may also be of great interest to the content providers, especially when combined with the subscriber's known profile.

While the foregoing describes and illustrates the preferred embodiment of the present invention and suggests certain modifications thereto, those of ordinary skill in the art will recognize that still further changes and modifications may be made therein without departing from the scope of the invention. Accordingly, the above description should be construed as illustrative and not in a limiting sense, the scope of the invention being defined by the following claims.

## Claims

1. A system for providing integrated on-demand access to media content through a television, comprising:
a plurality of interface means (STB1, STB2) for reproducing media content on a plurality of televisions, each such interface means including an authentication means (SC1, SC2) for authenticating an individual subscriber or group of subscribers to the system;
at least one database server (SDB) for storing, accessing and maintaining a subscriber database;
a plurality of media server means (MS1,MS2) for storage and provision of a plurality of items of media content, each item of media content being identified by a unique location-independent name;
a plurality of meta-data server means (MDS1, MDS2, MDS3, MDS4) for storage and provision of meta-data concerning the items of media content;
a plurality of mapping server means (MAP1, MAP2, MAP3, MAP4) for mapping a location of the plurality of items of media content on the plurality of media servers means according to their location-independent names;
a plurality of interface server means (is1, is2) comprising personalisation means for individual customisation of a user interface based on information stored in the subscriber database and meta-data from the plurality of meta-data server means, and location lookup means for discovering from the plurality of mapping server means at least one media server which holds a copy of an item of media content identified by a location-independent name;
a network (N1) connecting at least the plurality of interface means, the at least one database server, the plurality of media server means, the plurality of meta-data server means, the plurality of mapping server means and the plurality of interface server means.

2. The system of claim 1, wherein the meta-data server means, mapping server means and interface server means are each software subsystems which reside on the same or different server computers in any combination.

3. The system of claim 1, wherein the authentication means comprises means for insertion of a data-carrying card and means for reading authentication information from said card.

4. The system of claim 1, wherein the subscriber database includes profile information about each subscriber, and personalisation means includes a matching means for generating a list of recommended content for each subscriber, making use of the meta-data about the content from the plurality of meta-data server means, together with the profile information for each subscriber from the integrated subscriber database.

5. The system of claim 1, wherein each of the mapping server means obtains content maps from a local subset of the media server means, and floods content advertisements throughout the network to the other mapping server means.

6. The system of claim 1, wherein the user interface comprises a plurality of substantially distinct screens which can be navigated by the subscriber with the input means and which include at least one of:
genre browsing means for browsing the plurality of items media content according to a genre classification;
bookmark browsing means for browsing the plurality of items of media content which have been the subject of a previous subscriber request to bookmark them;
portfolio browsing means for browsing the plurality of items of media content according to authorship, appearance or other involvement of an individual or group with the creation of the media content.

7. The system of claim 1, wherein the meta-data includes a location-independent name, and further information including at least one of:
authorship, appearance or other involvement of an individual or group with the creation of the media content;
classification of the media content according to genre:
profiling of the media content according to qualities including violence. adult content or comedy;
pricing information applicable to the media content;
dates of publication and regional release dates of the media content;
links to other media associated with the media content, including subtitles, Web-sites, soundtracks, or books.
natural language identification for the media content; or
statutory rating information for the media content.

8. A method for providing on-demand access to an interactive media service through a television, comprising:
authenticating a subscriber to the service;
generating a personalized user interface for the subscriber, comprising looking up a subscriber profile in a subscriber database, looking up meta-data about a plurality of items of media content in a distributed meta-data database, matching the subscriber profile to the meta-data, and selecting an at least one item of media content predicted to be of interest to the subscriber for inclusion in the personalized user interface;
selecting by the subscriber of an item of media content from the personalized user interface;
requesting from the interactive media service the item of media content by a location-independent name;
discovering an at least one media server holding a copy of the item of media content out of a plurality of possible media servers using the location-independent name;
delivering the item of media content from a media server to the subscriber.

9. The method of claim 8 wherein generating the personalized user interface is performed at least in part as a background process in advance of a subscriber request.

10. The method of claim 8 wherein discovering comprises:
sending a request to a first mapping server to look up an at least one media server holding a copy of the item of media content in a map held by the first mapping server;
if known at the first mapping server, responding to the request directly with the address of the at least one media server holding a copy of the item of media content;
if not known at the first napping server, delegating the request to a second mapping server.

11. The method of claim 8 further comprising indirecting the delivery via a second media server before forwarding to the subscriber at a faster rate than the forwarding to the subscriber.

12. The method of claim 11 further comprising keeping the item of media content at the second media server and advertising the item of media content at the second media server for subsequent use by the same subscriber or other subscribers.

13. The method of claim 8 further comprising entering a record of the delivery in a transaction database and accounting for the record of delivery in an accounting system comprising a plurality of subscriber accounts and at least one merchant account.

## Patentansprüche

1. System zur Bereitstellung von integriertem Zugriff on Demand zu Media-Inhalten über ein Fernsehgerät, bestehend aus:
einer Vielzahl von Schnittstellenmitteln (STB1, STB2) zur Reproduktion von Media-Inhalt (SC1, SC2) auf einer Vielzahl von Fernsehgeräten, wobei jedes solcher Schnittstellenmittel ein Authentifizierungsmittel zur Authentifizierung eines einzelnen oder einer Gruppe von Systemabonnenten umfasst;
mindestens einem Datenbank-Server (SDB) für die Speicherung, den Zugriff und die Pflege einer Abonnenten-Datenbank;
einer Vielzahl von Media-Servermitteln (MS1, MS2) zur Speicherung und Bereitstellung einer Vielzahl von Media-Inhalt-Elementen, wobei jedes Media-Inhalt-Element durch einen einzigen ortsunabhängigen Namen identifiziert wird;
einer Vielzahl von Metadaten-Servermitteln (MDS1, MDS2, MDS3, MDS4) zur Speicherung und Bereitstellung von Metadaten, welche die Media-Inhalt-Elemente betreffen;
einer Vielzahl von Map-Servermitteln (MAP1, MAP2, MAP3, MAP4)zur Zuordnung eines Orts der Vielzahl von Media-Inhalt-Elementen auf der Vielzahl von Media-Servermitteln gemäss ihrer ortsunabhängigen Namen;
einer Vielzahl von Schnittstellen-Servermitteln (IS1, IS2), welche Personalisierungsmittel für individuelle Anpassungen einer Bentzer-Schnittstelle auf der Grundlage von in der Abonnenten-Datenbank gespeicherten Information aufweisen und Metadaten aus einer Vielzahl von Meta-Datenservermitteln aufweisen, und Orts-Suchmitteln, um aus der Vielzahl von Map-Servermitteln wenigstens einen Media-Server ausfindig zu machen, welcher eine Kopie eines über einen ortsunabhängigen Namen identifizierten Media-Inhalt-Elements enthält;
einem Netzwerk (N1), welches wenigstens die Vielzahl der Schnittstellenmittel, den wenigstens einen Datenbank-Server, die Vielzahl von Medien-Servermitteln, die Vielzahl von Metadaten-Servermitteln, die Vielzahl von Map-Servermittels und die Vielzahl von Schnittstellen-Servermitteln verbindet.

2. Das System von Patentanspruch 1, wobei die Metadaten-Servermittel, Map-Servermittel und Schnittstellen-Servermittel jeweils auf demselben oder verschiedenen Server-Computern in jeder beliebigen Kombination speicherresidente Software-Untersysteme sind.

3. Das System von Patentanspruch 1, in dem die Authentifizierungsmittel Mittel zum Einfügen von Datenträgerkarten und Mittel zum Lesen von Authentifizierungsinformation besagter Karte enthalten.

4. Das System von Patentanspruch 1, wobei die Abonnenten-Datenbank Profilinformation zu jedem Abonnenten umfasst und das Personalisierungsmittel ein geeignetes Mittel zur Generierung einer Liste des für jeden Abonnenten empfohlenen Inhalts einschließt, welche Metadaten zum Inhalt aus der Vielzahl von Metadaten-Servermitteln gemeinsam mit der Profilinformation für jeden Abonnenten aus der integrierten Abonnenten-Datenbank nutzt.

5. Das System von Patentanspruch 1, wobei jedes Map-Servermittel Inhalt-Listen aus einem lokalen Subset der Media-Servermittel erhält und Inhalt-Anzeigen über das Netzwerk zu den übrigen Map-Servermitteln strömen lässt.

6. Das System von Patentanspruch 1, wobei die Benutzer-Schnittstelle eine Vielzahl von sich wesentlich unterscheidenden Screens, in welchen der Abonnent anhand der Eingabemittel navigieren kann, aufweist und welche mindestens ein von Folgenden beinhalten:
Genre-Browsing-Mittel zum Durchstöbern der Vielzahl von Media-Inhalt-Elementen gemäss einer Genre-Klassifikation;
Bookmark-Browsing-Mittel zum Durchstöbern der Vielzahl von Media-Inhalt-Elementen, welche Gegenstand einer vorausgehenden Abonnenten-Anforderung, sie als Bookmark (Lesezeichen) abzuspeichern, gewesen sind;
Portfolio-Browsing-Mittel zum Durchstöbern der Vielzahl von Media-Inhalt-Elementen nach Verfasserschaft, Erscheinungsbild oder sonstiger Mitwirkung eines Individuums oder einer Gruppe bei der Erstellung von Media-Inhalt.

7. Das System von Patentanspruch 1, wobei die Metadaten einen ortsunabhängigen Namen umfassen und sonstige Information mit wenigstens einer hinsichtlich:
Verfasserschaft, Erscheinungsbild oder sonstiger Mitwirkung eines Individuums oder einer Gruppe bei der Erstellung von Media-Inhalt;
Klassifikation des Media-Inhalts nach Genre;
Profilierung des Media-Inhalts nach Qualitätsmerkmalen, einschließlich in Bezug auf Gewalttätigkeit, Inhalt für Erwachsene oder Komödien;
Information zu den für den Media-Inhalt anwendbaren Preisen;
Veröffentlichungstermine und regionale Freigabe-Termine für Media-Inhalt;
Links zu anderen mit dem Media-Inhalt zusammenhängenden Medien, einschließlich Untertitel, Websites, Soundtracks oder Bücher;
natürlicher Sprachidentifikation für den Media-Inhalt; oder
gesetzlicher Bewertungsinformation für den Media-Inhalt.

8. Methode zur Bereitstellung von Zugriff on Demand zu einem interaktiven Media-Service anhand eines Fernsehgeräts mit:
Authentifizierung eines Abonnenten für den Zugriff zum Service;
Generierung einer personalisierten Benutzer-Schnittstelle für den Abonnenten, beinhaltend die Suche nach einem Abonnentenprofil in einer Abonnenten-Datenbank, Suche nach Metadaten zu einer Vielzahl von Media-Inhalt-Elementen in einer verteilten Metadaten-Datenbank, die das Abonnenten-Profil den Metadaten zuordnet und Auswahl von wenigstens einem als von Interesse für den Abonnenten vorgegebenen Media-Inhalt-Elements zwecks Einbeziehung in die personalisierte Benutzer-Schnittstelle;
Auswahl eines Media-Inhalt-Elements durch den Abonnenten über die personalisierte Benutzer-Schnittstelle;
Anforderung des Media-Inhalt-Elements vom interaktiven Media-Service über einen ortsunabhängigen Namen;
Auffindung von wenigstens einem Media-Server, welcher eine Kopie des Media-Inhalt-Elements enthält, in einer Vielzahl möglicher Media-Server, welche den ortsunabhängigen Namen verwenden;
Lieferung des Media-Inhalt-Elements über einen Media-Server an den Abonnenten.

9. Die Methode von Patentanspruch 8, wobei die Generierung der personalisierten Benutzer-Schnittstelle mindestens zum Teil als Hintergrund-Prozess vor einer Abonnenten-Anforderung ausgeführt wird.

10. Die Methode von Patentanspruch 8, wobei die Auffindung Folgendes beinhaltet:
Übermittlung einer Anforderung zu einem ersten Map-Server zwecks Suche von wenigstens einem Media-Server, welcher eine Kopie des Media-Inhalt-Elements in einer im ersten Map-Server enthaltenen Liste enthält;
sofern am ersten Map-Server bekannt, direkte Beantwortung der Anforderung mit der Adresse von dem wenigsten einen Media-Server, welcher eine Kopie des Media-Inhalt-Elements enthält;
sofern am ersten Map-Server unbekannt, Delegierung der Anforderung an einen zweiten Map-Server.

11. Die Methode von Patentanspruch 8, die ferner darin besteht, dass die Lieferung über einen zweiten Media-Server indirekt erfolgt, bevor der Versand zum Abonnenten mit einer schnelleren Geschwindigkeit als der Versand zum Abonnenten abläuft.

12. Die Methode von Patentanspruch 11, die ferner darin besteht, dass das Media-Inhalt-Element am zweiten Media-Server verwahrt wird und dass das Media-Inhalt-Element am zweiten Media-Server für spätere Nutzung durch denselben Abonnenten oder andere Abonnenten angezeigt wird.

13. Die Methode von Patentanspruch 8, die ferner darin besteht, dass eine Aufzeichnung der Lieferung in eine Transaktions-Datenbank eingegeben wird und die Aufzeichnung der Lieferung in einem Buchungssystem, welches eine Vielzahl von Abonnenten-Konten und wenigstens ein Handelskonto beinhaltet, gebucht wird.

## Revendications

1. Système pour fournir un accès sur demande intégré au contenu média via une télévision, comprenant :
une pluralité de moyens formant interface (STB1, STB2) pour reproduire le contenu média sur une pluralité de télévisions, chaque moyen formant interface comprenant des moyens d'authentification (SC1, SC2) pour authentifier un abonné individuel ou un groupe d'abonnés au système ;
au moins un serveur de base de données (SDB) pour stocker, accéder à et gérer une base de données d'abonnés ;
une pluralité de moyens formant serveur média (MS1, MS2) pour stocker et fournir une pluralité d'éléments de contenu média, chaque élément de contenu média étant identifié par un nom unique indépendant de l'emplacement ;
une pluralité de moyens formant serveur de méta-données (MDS1, MDS2, MDS3, MDS4) pour stocker et fournir des méta-données relatives aux éléments de contenu média ;
une pluralité de moyens formant serveur de mappage (MAP1, MAP2, MAP3, MAP4) pour mapper un emplacement de la pluralité d'éléments de contenu média à la pluralité de moyens formant serveur média selon leurs noms indépendants de l'emplacement ;
une pluralité de moyens formant serveur d'interface (IS1, IS2) comprenant des moyens de personnalisation pour la personnalisation individuelle d'une interface utilisateur basée sur les données stockées dans la base de données d'abonnés et sur les méta-données de la pluralité des moyens formant serveur de méta-données et des moyens de recherche d'emplacement pour détecter, à partir de la pluralité des moyens formant serveur de mappage, au moins un serveur média contenant une copie d'un élément de contenu média identifié par un nom indépendant de l'emplacement ;
un réseau (N1) connectant au moins la pluralité des moyens formant interface, le serveur d'au moins une base de données, la pluralité des moyens formant serveur média, la pluralité des moyens formant serveur de méta-données, la pluralité des moyens formant serveur de mappage et la pluralité des moyens formant serveur d'interface.

2. Système selon la revendication 1, dans lequel les moyens formant serveur de méta-données, les moyens formant serveur de mappage et les moyens formant serveur d'interface correspondent à chaque sous-système logiciel hébergé sur les mêmes serveurs ou des serveurs différents, quelle que soit la combinaison.

3. Système selon la revendication 1, dans lequel les moyens d'authentification comprennent des moyens pour insérer une carte portant des données et des moyens pour lire les données d'authentification de ladite carte.

4. Système selon la revendication 1, dans lequel la base de données d'abonnés comprend des données de profil sur chaque abonné et les moyens de personnalisation comprennent des moyens de correspondance pour générer une liste de contenu recommandé pour chaque abonné, utilisant les méta-données sur le contenu issues de la pluralité des moyens formant serveur de méta-données, conjointement avec les données de profil de chaque abonné issues de la base de données d'abonnés intégrée.

5. Système selon la revendication 1, dans lequel chacun des moyens formant serveur de mappage reçoit des cartes de contenu d'un sous-ensemble local des moyens formant serveur média et diffuse des annonces de contenu dans l'ensemble du réseau vers les autres moyens formant serveur de mappage.

6. Système selon la revendication 1, dans lequel l'interface utilisateur comprend une pluralité d'écrans sensiblement distincts dans lesquels l'abonné peut naviguer grâce à des moyens d'entrée et qui comprend au moins l'un des moyens suivants :
un moyen de navigation dans les genres pour naviguer parmi la pluralité d'éléments de contenu média en fonction d'un classement par genre ;
un moyen de navigation dans les signets pour naviguer parmi la pluralité d'éléments de contenu de média pour lesquels un abonné a précédemment demandé qu'ils soient marqués en tant que signets ;
un moyen de navigation dans les portefeuilles pour naviguer parmi la pluralité d'éléments de contenu média en fonction du créateur, de l'apparence ou toute autre implication d'une personne ou d'un groupe dans la création du contenu média.

7. Système selon la revendication 1, dans lequel les méta-données comprennent un nom indépendant de l'emplacement ainsi que d'autres données comprenant au moins l'un des moyens suivants :
le créateur, l'apparence ou toute autre implication d'une personne ou d'un groupe dans la création du contenu média ;
le classement du contenu média par genre ;
la détermination de profils de contenu média par qualité, comprenant la violence, le contenu destiné aux adultes ou la comédie ;
les données de prix applicables au contenu média ;
les dates de publication et les dates de parution au niveau régional du contenu média ;
les liens vers d'autres médias associés au contenu média, comprenant les sous-titres, les sites Web, les bandes son ou les livres ;
l'identification de la langue d'origine du contenu média ; ou
les données du taux statutaire du contenu média.

8. Procédé pour fournir un accès sur demande intégré à un service média interactif via une télévision, comprenant les étapes suivantes :
authentifier un abonné au service ;
générer une interface utilisateur personnalisée pour l'abonné, comprenant la recherche d'un profil d'abonné dans une base de données d'abonnés, la recherche de méta-données sur une pluralité d'éléments de contenu média dans une base de données de méta-données distribuée, la correspondance du profil d'abonné aux méta-données et la sélection d'au moins un élément de contenu média censé intéresser l'abonné pour l'inclure dans l'interface utilisateur personnalisée ;
permettre à l'abonné de sélectionner un élément de contenu média à partir de l'interface utilisateur personnalisée ;
faire une demande, à partir du service média interactif, de l'élément de contenu média par un nom indépendant de l'emplacement ;
détecter au moins un serveur média hébergeant une copie de l'élément de contenu média parmi une pluralité de serveurs média possibles à l'aide du nom indépendant de l'emplacement ;
envoyer l'élément de contenu média à l'abonné à partir du serveur média.

9. Procédé selon la revendication 8, dans lequel la génération de l'interface utilisateur personnalisée est exécutée au moins en partie en tant que processus d'arrière-plan par anticipation à une demande d'abonnée.

10. Procédé selon la revendication 8, dans lequel la détection comprend les étapes suivantes :
envoyer une demande à un premier serveur de mappage pour rechercher au moins un serveur média hébergeant une copie de l'élément du contenu média dans une carte stockée sur le premier serveur de mappage ;
répondre, si le premier serveur de mappage connaît la réponse, à la demande directement avec l'adresse d'au moins un serveur média hébergeant la copie de l'élément du contenu média ;
renvoyer la demande, si le premier serveur de mappage ne connaît pas la réponse, à un second serveur de mappage.

11. Procédé selon la revendication 8, comprenant en outre l'étape consistant à dérouter la livraison via un second serveur média avant de la transmettre à l'abonné à une vitesse plus élevée que la transmission à l'abonné.

12. Procédé selon la revendication 11, comprenant en outre les étapes consistant à stocker l'élément du contenu média sur le second serveur média et à annoncer l'élément de contenu média sur le second serveur média pour une utilisation ultérieure par le même abonné ou d'autres abonnés.

13. Procédé selon la revendication 8, comprenant en outre les étapes consistant à saisir un enregistrement de la livraison dans une base de données de transaction et à inscrire l'enregistrement de la livraison dans un système de comptabilité comprenant une pluralité de comptes d'abonnés et au moins un compte commercial.
